# EUROPÄISCHE PATENTSCHRIFT

(11) **EP 1 854 312 B1**
(45) Veröffentlichungstag und Bekanntmachung des Hinweises auf die Patenterteilung: **28.03.2018**
(21) Anmeldenummer: 06708554.8
(22) Anmeldetag: 28.02.2006
(51) Int. Cl.: H04W 64/00

(54) **VERFAHREN ZUR MOBILEN KOMMUNIKATION DURCH DIE MARKIERUNG VON BILDOBJEKTEN, SOWIE MOBILES GERÄT UND KOMMUNIKATIONSEINRICHTUNG**
METHOD FOR CARRYING OUT MOBILE COMMUNICATION BY MARKING IMAGE OBJECTS, AND MOBILE UNIT AND COMMUNICATIONS DEVICE
PROCEDE DE COMMUNICATION MOBILE PAR MARQUAGE D'OBJETS D'IMAGE, APPAREIL MOBILE ET DISPOSITIF DE COMMUNICATION

(30) Priorität: 04.03.2005 DE 102005010030
(43) Veröffentlichungstag der Anmeldung: 14.11.2007
(73) Patentinhaber: Siemens Aktiengesellschaft, 80333 München (DE)
(72) Erfinder: ESTERMANN, Colin, 82166 Gräfelfing (DE); JÄGER, Hubert, 82049 Pullach (DE); KUTKA, Robert, 82269 Geltendorf (DE); WINKLER, Christian, 80339 München (DE)
(86) Internationale Anmeldenummer: PCT/EP2006/060327
(87) Internationale Veröffentlichungsnummer: WO 2006/092394

(56) Entgegenhaltungen:
- WO-A-01/96906
- US-A1- 2002 090 068

## Beschreibung

Die Erfindung betrifft ein Verfahren gemäß dem Oberbegriff des Anspruchs 1, ein mobiles Gerät gemäß dem Oberbegriff des Anspruchs 9 und eine Kommunikationseinrichtung gemäß dem Oberbegriff des Anspruchs 10.

Bei einer Kommunikation zwischen zwei Personen über eine größere Entfernung wird zumeist die Sprachtelephonie benutzt. Aufgrund von Doppeldeutigkeiten und Verständnisproblemen der menschlichen Sprache kann es bei komplexen Sachzusammenhängen zu Verwechslungen und Missverständnissen kommen. So ist bspw. aus [1] das Produkt NetMeeting der Firma Microsoft bekannt, mit dem eine Videokonferenz und ein gemeinsames Bearbeiten von Softwareprogrammen ermöglicht wird. Das Dokument WO 01/96906 A1 offenbart die dynamische Überlagerung von benutzerdefinierten Daten zu Kartendaten in einem mobilen Kommunikationssystem. Die der Erfindung zugrunde liegende Aufgabe ist es ein Verfahren sowie ein mobiles Gerät und eine Kommunikationseinrichtung anzugeben, welches/welche eine verbesserte Kommunikation zwischen zwei Gesprächspartnern in einfacher und zuverlässiger Weise ermöglicht.

Diese Aufgabe wird ausgehend von dem Verfahren gemäß dem Oberbegriff des Anspruchs 1 durch dessen kennzeichnende Merkmale gelöst. Ferner wird diese Aufgabe durch ein mobile Gerät und eine Kommunikationseinrichtung gemäß dem jeweiligen Oberbegriff des Anspruchs 9 bzw. 10 durch dessen kennzeichnende Merkmale gelöst.

Bei dem Verfahren zur mobilen Kommunikation zwischen einem mobilen Gerät und einer Kommunikationseinrichtung, wobei durch das mobile Gerät und die Kommunikationseinrichtung mittels eines Telekommunikationsprotokolls Sprachnachrichten ausgetauscht werden, ist durch das mobile Gerät zumindest ein Bild erzeugbar, wird im Falle des Erzeugens zumindest eines Bildes von dem mobilen Gerät an die Kommunikationseinrichtung zumindest dieses Bild übermittelt, seitens der Kommunikationseinrichtung wird auf Grundlage des übermittelten Bildes ein Bildobjekt selektiert und eine Position dieses Bildobjekts ermittelt, die ermittelte Position durch die Kommunikationseinrichtung an das mobile Gerät übertragen, und durch das mobile Gerät mindestens eines der Bilder derart markiert, dass ausgehend von zumindest einem der für die Selektion des Bildobjekts zugrunde gelegten, übermittelten Bilder und der Position eine Ortslage des selektierten Bildobjekts für mindestens ein zu markierendes Bild bestimmt und mindestens einem der Bilder an der Ortslage ein Markierungsobjekt überlagert wird.

Durch das erfindungsgemäße Verfahren wird eine Kommunikation zwischen zwei Personen dadurch verbessert, dass Anweisungen bzw. Beschreibungen mittels einer Markierung in mindestens einem Bild durchgeführt werden. Diese Anweisungen bzw. Beschreibungen können zudem mit und ohne zusätzliche Sprachnachricht mitgeteilt werden.

Durch Verwendung der Position wird eine effiziente und auf unterschiedliche Bildgrößen anpassbare Selektion des Bildobjekts erzielt. Zusätzlich wird durch Ermittlung der Ortslage diese Anpassung auf zu markierende Bilder ermöglicht.

Durch die Überlagerung des Markierungsobjekts in einem zu markierenden Bild kann das selektierte Bildobjekt in dem mobilen Gerät sichtbar zur Darstellung gebracht werden. Zusätzlich kann das Markierungsobjekt adaptiv angepasst werden, wie z.B. dessen Form oder mit einer transparenten Farbe.

Vorzugsweise werden durch die Kommunikationseinrichtung an das mobile Gerät die ausgewählte Position und eine Kennzeichnung des für die Selektion des Bildobjekts zugrunde gelegten, übermittelten Bildes übertragen. Somit ist das Bild zur Ermittlung der Ortslage eindeutig identifizierbar, auch wenn mehrere Bilder von dem mobilen Gerät an die Kommunikationseinrichtung übermittelt worden sind.

In einer bevorzugten Erweiterung werden mehrere Positionen für zumindest ein zu selektierendes Bildobjekt ausgewählt. Hierdurch kann eine Form des zu selektierenden Bildobjekts in einer höheren Detailtreue beschrieben werden als durch eine einzige Position. Zusätzlich können neben einem Bildobjekt auch mehrere Bildobjekte definiert werden. So werden bspw. die Mitglieder einer Familie (Vater, Mutter und zwei Kinder) aus einem Gruppenbild mit mehreren zehn Personen als eigene Bildobjekte angezeigt.

Wird durch die zumindest eine ausgewählte Position ein das selektierte Bildobjekt beschreibender Bildbereich definiert, so ist das Bildobjekt in einer Empfangsvorrichtung, d. h. im mobilen Gerät exakter bestimmbar. Ferner kann dadurch eine Detektion des selektierten Bildobjekts in mindestens einem, für die Selektion des Bildobjekts zugrunde gelegten, übermittelten Bildes, nachfolgenden Bild durchgeführt werden. Dies ist insbesondere für sich zeitlich ändernde Bildinhalte, wie z.B. Personen einer Personengruppe, von Vorteil.

Wird zusätzlich oder alternativ für jede der Positionen eine dazugehörige Ortslage generiert und das zu markierende Bild an jeder Ortslage mit jeweils einem Markierungsobjekt überlagert, so können mehrere Bildobjekte in einem Bild markiert werden.

Vorzugsweise wird durch das mobile Gerät zur Bestimmung der Ortslage in einem zu markierenden Bild ein Referenzbildbereich in dem selben Bild, das zur Selektion des Bildobjekts herangezogen wird, bestimmt, ein Bildsuchbereich im zu markierenden Bild definiert, die Bildposition des Bildsuchbereichs im zu markierenden Bild solange verändert, bis eine Identität zwischen Referenzbildbereich und Bildsuchbereich einen vorgebbaren Schwellwert unterscheitet. Hierdurch wird eine exakte Bestimmung der Ortslage auch dann gewährleistet, falls sich das Bildobjekt im zu markierenden Bild und im zur Selektion der Bildobjekte herangezogenen Bild verändert hat.

Wird zusätzlich die Identität durch eine Identitätszahl aus einer Summe der quadrierten Differenzwerte der korrespondierenden Bildpunkte aus dem Bildsuchbereich und dem Referenzbildbereich erzeugt, so kann die Suche nach der exakten Bildposition in einfacher Weise auf einer Recheneinheit durchgeführt werden.

Vorzugsweise wird als Telekommunikationsprotokoll ein drahtloser Übertragungsstandard, insbesondere WLAN(WLAN = Wireless Local Area Network) oder GSM(GSM = Global System for mobile Communications) eingesetzt. Damit kann das erfindungsgemäße Verfahren mittels eines standardisierten Übertragungsprotokolls in kostengünstiger Weise realisiert werden.

Die Erfindung betrifft weiterhin ein mobiles Gerät mit einem ersten Mittel zum Erzeugen mindestens eines Bildes, einem zweiten Mittel zum Übermitteln zumindest eines der Bilder von dem mobilen Gerät an eine Kommunikationseinrichtung, einem dritten Mittel zum Empfangen der ausgewählten Position von der Kommunikationseinrichtung, und einem vierten Mittel zum Markieren mindestens eines der Bilder, wobei das vierte Mittel derart ausgestaltet ist, dass ausgehend von zumindest einem der für die Selektion des Bildobjekts zugrunde gelegten, übermittelten Bilder und der Position eine Ortslage des selektierten Bildobjekts für mindestens ein zu markierendes Bild bestimmt und mindestens einem der Bilder an der Ortslage ein Markierungsobjekt überlagert wird. Mit dem mobilen Gerät kann das erfindungsgemäße Verfahren realisiert werden.

Des Weiteren betrifft die Erfindung eine Kommunikationseinrichtung, mit einem fünften Mittel zum Empfangen zumindest eines der Bilder von dem mobilen Gerät, einem sechsten Mittel zum Selektieren eines Bildobjekts auf Grundlage des übermittelten Bildes und zum Ermitteln einer Position dieses Bildobjekts, und mit einem siebten Mittel zum Übermitteln der ausgewählten Position an das mobile Gerät. Mit der Kommunikationseinrichtung kann das erfindungsgemäße Verfahren realisiert werden

Sind das mobile Gerät und/oder die Kommunikationseinrichtung in einem tragbaren Gerät, insbesondere einem Gerät nach WLAN-Standard und/oder GSM-Standard, integriert, so können diese in kostengünstiger Weise implementiert werden.

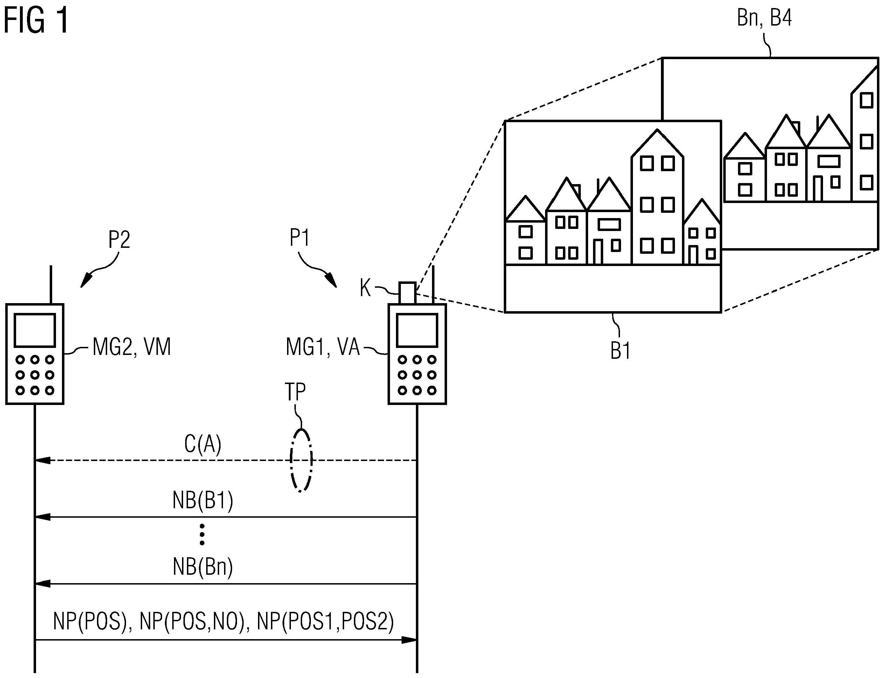

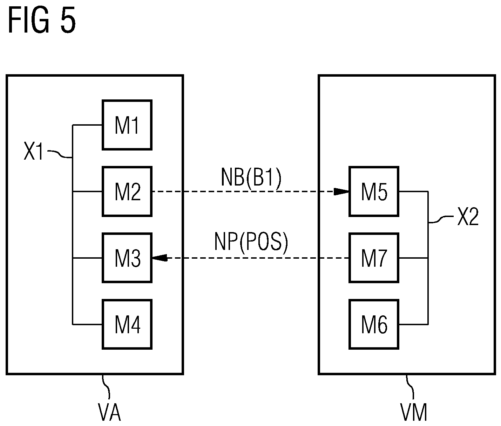

Weitere Einzelheiten sowie Vorteile der Erfindung werden anhand der Figuren 1 und 5 näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Im Einzelnen zeigen:
- Figur 1: ein Signalflussdiagramm des erfindungsgemäßen Verfahrens zum Austausch von Nachrichten zwischen einem mobilen Gerät und einer Kommunikationseinrichtung;
- Figur 2: ein aufgenommenes und ein dazugehöriges markiertes Bild;
- Figur 3: zwei Bilder, bei denen mit Hilfe eines Bildobjektverfolgungsverfahrens eine Markierung eines Bildobjekts vorgenommen wird.
- Figur 4: zwei Bilder, bei denen zwei Bildobjekte in einem Bild selektiert und jeweils mit einem Markierungsobjekt markiert werden;
- Figur 5: einen jeweiligen Aufbau des mobilen Geräts und der Kommunikationseinrichtung.

Elemente mit gleicher Funktion und gleicher Wirkungsweise sind in den Figuren 1 bis 5 mit denselben Bezugszeichen versehen.

Mit Hilfe von Figur 1 wird ein Beispiel für das erfindungsgemäße Verfahren näher erläutert. Bei diesem Beispiel wird angenommen, dass zwei Personen P1, P2 jeweils mittels eines Telefons MG1, MG2 Sprachnachrichten über ein Telekommunikationsprotokoll TP austauschen. Die jeweiligen Telefone sind bspw. als tragbare Telefone, insbesondere als Mobilfunktelefone, ausgestaltet, die bspw. nach dem GSM-Standard (GSM - Global Symbole for Mobile Communications), dem UMTS-Standard (UMTS - Universal Mobile Telecommunications System) oder dem WLAN-Standard (WLAN - Wireless Local Area Network) arbeiten. Im Allgemeinen ist das erste Telefon MG1 ein mobiles Gerät VA und das zweite Telefon MG2 eine Kommunikationseinrichtung VM. Die Sprachnachrichten werden vorzugsweise in komprimierter Form übertragen, wobei bspw. der AMR-Codec (AMR - Adaptive Multi Rate) oder der ITU G.723.1 Codec eingesetzt wird.

Zunächst kommunizieren diese beiden Personen P1, P2 mit ihren Telefonen MG1, MG2 mittels Sprachnachrichten. Dies ist in Figur 1 mit dem Bezugszeichen C(A) gekennzeichnet. Diese Kommunikation ist bidirektional. Die erste Person P1 befindet sich bspw. auf einem Marktplatz und sucht ein bestimmtes Haus. Die zweite Person P2 versucht mittels verbaler Beschreibung der ersten Person P1 das gesuchte Haus zu beschreiben. Da die Häuser sehr ähnlich sind kann die erste Person P1 anhand der verbalen Beschreibung das richtige Haus nicht identifizieren.

In einer alternativen Ausführungsform kann die Sprachkommunikation uni-direktional sein und zwar werden die Sprachnachrichten von dem ersten Telefon MG1 an das zweite Telefon MG2 übermittelt.

Im Folgenden wenden die zwei Personen P1, P2 das erfindungsgemäße Verfahren an, um das gesuchte Haus bestimmen zu können. Das mobile Gerät VA der ersten Person P1 umfasst eine Kamera K, mit der mindestens ein Bild B1, ..., Bn von den Häusern am Marktplatz aufgenommen wird. Die Bilder werden bspw. nach Aktivierung durch die erste Person P1 generiert. Danach wird mindestens eines der erzeugten Bilder B1 von dem mobilen Gerät VA an die Kommunikationseinrichtung VM übermittelt. So können die Bilder mit Hilfe einer oder mehrerer Bildnachrichten NB übertragen werden. Hierzu wird bspw. eine spezielle Datenverbindung zwischen dem mobilen Gerät VA und der Kommunikationseinrichtung VM aufgebaut, die zum Austausch der zum Ausführen des erfindungsgemäßen Verfahrens benötigten Nachrichten benutzt wird. Es ist in der Praxis zweckmäßig die Bilder, wie z.B. B1, vor der Übermittlung zu komprimieren und nach Empfang zu dekomprimieren. Hierbei sind eine Vielzahl von Kompressionsverfahren bekannt, wie z.B. JPEG (JPEG - Joint Picture Expert Group) oder ITU H.264 Video Codec.

Die Kommunikationseinrichtung VM empfängt zumindest eines der Bilder B1 und zeigt dieses bspw. auf dem Bildschirm der Kommunikationseinrichtung VM der zweiten Person P2 an. Die zweite Person P2 selektiert, z.B. unter Zuhilfenahme der Tastatur, das gewünschte Bildobjekt SO, z.B. das zweite Haus von links im Bild B1. Somit ist eine Position POS des gewünschten Bildobjekts SO bekannt. Unter Selektion kann das Markieren mittels eines Punktes innerhalb des Bildobjekts SO als auch das Umkreisen des Bildobjekts SO verstanden werden. In einer alternativen Ausführungsform erfolgt die Selektion ohne eine Aktion der zweiten Person P2 automatisiert durch die Kommunikationseinrichtung VM. Zum Beispiel ist der Kommunikationseinrichtung VM das zu selektierende Bildobjekt aufgrund einer gespeicherten Photographie bekannt, so dass durch Vergleich der einzelnen Häuser im Bild B1 mit der gespeicherten Photographie des Bildobjekts SO die Position POS des gesuchten Hauses detektiert werden kann.

Die Position POS wird beispielsweise durch einen zweidimensionalen Zahlwert repräsentiert, der z.B. die Anzahl der Bildpunkte gemessen von der oberen linken Bildecke des Bildes B1 angibt. So beträgt bspw. die Position POS = {25, 50}. In einer Alternative kann die Position POS, gemessen von einem Bezugspunkt wie z.B. der linke oberen Bildecke, als relative Größe in Bezug zur Bildbreite und Bildhöhe dargestellt werden, wie z.B. Position POS = {12,5%, 50%} bei einer Bildbreite von 200 Bildpunkten und einer Bildhöhe von 100 Bildpunkten, d. h. 200x100 Bildpunkte.

Nach der Selektion des Bildobjekts SO wird die ermittelte Position POS von der Kommunikationseinrichtung VM an das mobile Gerät VA mittels einer Positionsnachricht NP übertragen. Werden mehrere Positionen POS durch die Kommunikationseinrichtung VM generiert, so können diese entweder jeweils einzeln oder gemeinsam mit einer Positionsnachricht NP übermittelt werden. Es ist in der Praxis zweckmäßig den Wert der Position POS vor der Übertragung zu komprimieren, z.B. mittels eines Hufmann-Verfahrens.

In einem nächsten Schritt wird nach Empfang der Positionsnachricht NP aus der Position POS eine Ortslage OL berechnet. So beträgt bspw. die Position POS = {12,5%, 50%}. Die Bildgröße des Bildes B1 umfasst eine Breite von 200 Bildpunkten und eine Höhe von 100 Bildpunkten. Hieraus kann die Ortslage OL, d.h. eine Position im zu markierenden Bild an der ein Markierungsobjekt MO erscheinen soll, berechnet werden. Diese beträgt bspw. OL={25,50} in Bildpunkten z. B. für ein zu markierendes Bild mit einer Bildgröße von 200x100 Bildpunkten. Beträgt die Bildgröße der zu markierenden Bild 1000x150 Bildpunkte so ergibt sich die Ortslage OL={125, 75}. Durch die Ortslage OL wird ermöglicht, dass dasjenige Bild, das zur Ermittlung der Position POS berücksichtigt wurde, eine unterschiedliche Bildgröße zu dem Bild aufweist, welches mit dem Markierungsobjekt MO markiert werden soll. Somit ist unter Berücksichtigung des für die Selektion des Bildobjekts SO zugrunde gelegten, übermittelten Bildes B1 und der Position POS die Ortslage OL ermittelt worden.

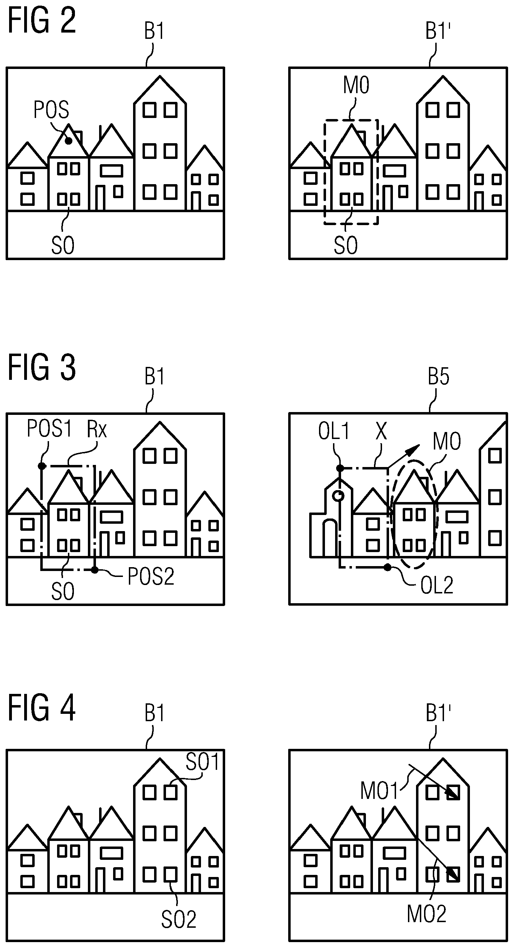

Nachfolgend wird an der Ortslage OL das Markierungsobjekt MO dem Bild B1 überlagert. Das Markierungsobjekt MO kann ein Pfeil sein, der auf das selektierte Bildobjekt SO zeigt oder eine Umrandung, die das selektierte Bildobjekt SO einschließt. Ferner kann das Markierungsobjekt MO eine transparente Farbe aufweisen, so dass sowohl die Markierung als auch das markierte Bildobjekt sichtbar bleiben. Im vorliegenden Beispiel wird das zweite Haus von links im Bild B1 mit einem gestrichelten Rahmen markiert. In Figur 2 sind daher das ursprüngliche Bild B1 und das mit dem Markierungsobjekt MO überlagerte Bild B1' abgebildet, wobei dieses Bild als markiertes Bild B'1 bezeichnet wird. Anschließend kann das markierte Bild B1' auf einem Bildschirm des mobilen Geräts VA der ersten Person P1 präsentiert werden.

Werden mehrere Bilder B1, ..., Bn von dem mobilen Gerät VA zur Kommunikationseinrichtung VM übermittelt, so kann die Kommunikationseinrichtung eines daraus auswählen, welches zur Selektion des Bildobjekts SO in Betracht gezogen wird. In den Bildern B1, B2, B3 ist ein bestimmtes Haus durch ein vorbeifahrendes Auto verdeckt. In Bild B4 ist dieses Haus ohne Verdeckung sichtbar. Deswegen entscheidet sich die Kommunikationseinrichtung VM bzw. dessen Benutzer (Person P2) Bild B4 für die Selektion des Bildobjekts SO zu verwenden.

Zur exakten Ermittlung der Ortslage OL kann neben der Position POS auch eine Kennzeichnung NO des für die Selektion des Bildobjekts SO zugrunde gelegten Bildes B4 mittels der Positionsnachricht NP übertragen werden. Diese Kennzeichnung NO ist ein charakteristisches Merkmal des Bildes B4, z.B. eine Bildnummer oder eine aus dem Bild B4 gewonnene Hash-Sequenz. Die Benutzung der Hash-Sequenz ist aus der Verschlüsselungstechnik bekannt, sodass darauf nicht weiter eingegangen wird. Mit Hilfe der Kennung NO kann das mobile Gerät VA dasjenige Bild B1 ermitteln, das für die Selektion des Bildobjekts SO zugrunde gelegten worden ist. Dieses durch die Kennzeichnung NO definierte Bild, z. B. B1 und die Position POS wird im Weiteren für die Erstellung der Ortslage OL benutzt.

Ferner kann durch die zumindest eine ausgewählte Position POS1, POS2 ein das selektierte Bildobjekt SO beschreibender Bildbereich definiert werden. Zum Beispiel wird in Figur 3 in dem Bild B1 das zweite Haus vom linken Bildrand durch einen strich-punktierten Bildbereich abgegrenzt. Dieser Bildbereich RX wird an seiner linken oberen Ecke durch POS1 = {10%, 40%} und an der rechten unteren Ecke durch POS2 = {30%, 60%} beschrieben. Anhand des übermittelten Bildbereichs RX d. h. in Form seiner beschreibenden Positionen POS1, POS2, kann das selektierte Bildobjekt SO im zu markierenden Bild exakter markiert werden, z.B. mittels eines das Bildobjekt SO umfassenden Rahmens MO, wie z.B. im markierten Bild B'1 der Figur 2 zusehen ist.

Zusätzlich oder alternativ kann auch mehr als ein Bildobjekt SO1, SO2 selektiert werden. Wie in Figur 4 zu sehen, werden in dem Bild B1 zwei Fenster des großen Hauses durch jeweils ein Bildobjekt SO1, SO2 selektiert. Für jedes selektierte Bildobjekt SO1, SO2 wird jeweils eine Position POS1, POS2 an das mobile Gerät VA übertragen und dort eine jeweilige Ortslage OL1, OL2 für jedes der Bildobjekte SO1, SO2 ermittelt. In Figur 4 ist ferner das markierte Bild B1' abgebildet, welches an der jeweiligen Ortslage OL1, OL2 ein dazugehöriges Markierungsobjekt MO1, MO2 zeigt. Diese Markierungsobjekte MO1, MO2 sind hierbei in Form eines Pfeils abgebildet, wobei im Allgemeinen diese Markierungsobjekte MO1, MO2 nicht identisches Aussehen aufweisen müssen.

In dem bisherigen Beispiel bzw. Varianten sind direkt aus der Position POS und zumindest einem der für die Selektion des Bildobjekts SO zugrunde gelegten, übermittelten Bilder B1 die Ortslage OL für das zu markierende Bild B1 generiert worden.

Wurden das übermittelte Bild B1 und das zu markierende Bild B5 zu verschiedenen Zeitpunkten aufgenommen, so kann, insbesondere bei unterschiedlichen Bildinhalten der Bilder B1, B5, das Markierungsobjekt MO an einer falschen Ortslage im zu markierenden Bild B5 zum Erliegen kommen. Dies kann durch folgende Vorgehensweise umgangen werden, wobei die Vorgehensweise anhand der Figur 3 näher erklärt wird.

So wird in Figur 3 Bild B1 das zu selektierende Bildobjekt SO mittels der Positionen POS1, POS2 definiert. Die Positionen betragen im Bildpunkten bspw. POS1 = {20, 40} und POS2 = {60, 60}. Nach Empfang dieser Positionen POS1, POS2 wird zunächst ein Referenzbildbereich RX generiert, der den durch die Position POS1, POS2 aufgespannten Bildbereich in dem selben, wie zur Selektion des Bildobjekts benutzen, Bild B1 bestimmt. Anschließend wird im zu markierenden Bild B5, welches nicht identisch zu demjenigen Bild B1 ist, das zur Selektion des Bildobjekts SO herangezogen wurde, ein Bildsuchbereich X definiert. Dieser Bildsuchbereich X wird durch die Ortslage OL1, OL2 bestimmt. Der Bildsuchbereich X wird bildpunktweise über das zu markierende Bild B5 geschoben. Diese Vorgehensweise ist in Figur 3 Bild 5 mit einem Pfeil angedeutet. An einer oder mehreren Bildpositionen wird der durch den Bildsuchbereich X definierte Bildbereich mit dem Referenzbildbereich RX verglichen. Hierbei wird eine Identitätszahl berechnet, die z.B. aus der Summe der quadrierten Differenzwerte der korrespondierenden Bildpunkte aus dem Bildsuchbereich X und dem Referenzbildbereich RX erzeugt wird. Verfahren zur Bestimmung einer Identität bzw. Identität sind aus der Bildcodierung unter dem Begriff "block matching", aus [2] oder [3] bekannt. Unterschreitet die Identitätszahl einen vorgebbaren Schwellenwert, so liegt an der aktuellen Bildposition ein zum Referenzbildbereich RX nahezu identischer Bildbereich vor. Das bedeutet, dass an der aktuellen Bildposition das selektierte Bildobjekt SO gefunden worden ist. Anschließend wird an der gefundenen, aktuellen Bildposition dem zu markierenden Bild B5 zumindest ein Markierungsobjekt MO überlagert.

Mit dieser Vorgehensweise kann das Auffinden des Bildobjekts in einem zu markierenden Bild auf ein aktuell aufgenommenes Bild angewandt und das Markierungsobjekt MO zusammen mit dem aufgenommenen Bild dargestellt werden. Dadurch kann die erste Person P1 trotz veränderlicher Bildinhalte, z.B. durch Hin-und Herbewegen des Telefons MG1, das selektierte Bildobjekt SO zuverlässig betrachten. Somit kann ein selektiertes Bildobjekt in Echtzeit in seiner Ortslage verfolgt werden, das Markierungsobjekt MO ist sozusagen mit dem zu selektierenden Objekt fest verbunden.

In Figur 5 ist der jeweilige Aufbau des mobilen Geräts VA und der Kommunikationseinrichtung VM dargestellt. Das mobile Gerät VA umfasst das erste, zweite, dritte und vierte Mittel M1, M2, M3, M4, die mit einem ersten Verbindungsnetzwerk X1 zum Austausch von Daten und Informationen verbunden sind. Die Kommunikationseinrichtung VM umfasst das fünfte, sechste und siebte Mittel M5, M6, M7, die mittels des zweiten Verbindungsnetzwerks X2 zum Austausch von Daten und Informationen miteinander verbunden sind. Das mobile Gerät VA und die Kommunikationseinrichtung VM tauschen Nachrichten aus, wie z.B. Bildnachrichten NB und/oder Positionsnachrichten NP.

### Literaturverzeichnis

[1] Informationen zu NetMeeting der Firma Microsoft, http://www.microsoft.com/windows/NetMeeting/default.ASP
[2] Dr. Kutka und Estermann, "Verfahren zur rechnergestützten Ermittlung von Bildbereichen in einem digitalisierten Bild", Patentanmeldung mit dem deutschen amtlichen Anmeldekennzeichen 10356090.4.
[3] Dr. Kutka, "Verfahren für die elastische Bewegungskompensation und zur Schärfung von Bildern, Vorrichtung zur Aufnahme von Bildern und Computerprogrammprodukt", Patentanmeldung mit dem deutschen amtlichen Anmeldekennzeichen 10214935.6.

## Patentansprüche

1. Verfahren zur mobilen Kommunikation zwischen einem mobilen Gerät (VA) und einer Kommunikationseinrichtung (VM), wobei durch das mobile Gerät (VA) und die Kommunikationseinrichtung (VM) mittels eines Telekommunikationsprotokolls (TP) Sprachnachrichten ausgetauscht werden,
mit folgenden Schritten:
- durch das mobile Gerät (VA) ist zumindest ein Bild (B1, ..., Bn) erzeugbar,
- im Falle des Erzeugens zumindest eines Bildes (B1) wird von dem mobilen Gerät (VA) an die Kommunikationseinrichtung (VM) zumindest dieses Bild (B1) übermittelt,
- seitens der Kommunikationseinrichtung (VM) wird ein Bildobjekt (SO) im übermittelten Bild (B1) selektiert und eine Position (POS) dieses Bildobjekts (SO) ermittelt,
- die ermittelte Position (POS) wird durch die Kommunikationseinrichtung (VM) an das mobile Gerät (VA) übertragen,
- durch das mobile Gerät (VA) wird mindestens eines der Bilder (B1, ..., Bn) derart markiert, dass ausgehend von zumindest einem der für die Selektion des Bildobjekts (SO) zugrunde gelegten, übermittelten Bilder (B1) aus der Position (POS) eine Ortslage (OL) des selektierten Bildobjekts (SO) in mindestens einem zu markierenden Bild (B1, ..., Bn) berechnet und mindestens einem der Bilder (B1, ..., Bn) an der Ortslage (OL) ein Markierungsobjekt (MO) überlagert wird.

2. Verfahren nach Anspruch 1,
**dadurch gekennzeichnet, dass**
durch die Kommunikationseinrichtung (VM) an das mobile Gerät (VA) die ausgewählte Position (POS) und eine Kennzeichnung (NO) des für die Selektion des Bildobjekts (SO) zugrunde gelegten, übermittelten Bildes (B1) übertragen werden.

3. Verfahren nach einem der vorhergehenden Ansprüche,
**dadurch gekennzeichnet, dass**
mehrere Positionen (POS1, POS2) für zumindest ein zu selektierendes Bildobjekt (SO1, SO2) ausgewählt werden.

4. Verfahren nach Anspruch 3,
**dadurch gekennzeichnet, dass**
durch die zumindest eine ausgewählte Position (POS1, POS2) ein das selektierte Bildobjekt (SO) beschreibender Bildbereich definiert wird.

5. Verfahren nach Anspruch 3 oder 4,
**dadurch gekennzeichnet, dass**
für jede der Positionen (POS1, POS2) eine dazugehörige Ortslage (OL1, OL2) generiert wird,
das zu markierende Bild (B1) an jeder Ortslage (OL1, OL2) mit jeweils einem Markierungsobjekt (MO1, MO2) überlagert wird.

6. Verfahren nach einem der vorhergehenden Ansprüche,
**dadurch gekennzeichnet, dass**
durch das mobile Gerät (VA) zur Bestimmung der Ortslage (OL) in einem zu markierenden Bild (B5) ein Referenzbildbereich (RX) in dem selben Bild (B1), das zur Selektion des Bildobjekts (SO) herangezogen wird, bestimmt wird, ein Bildsuchbereich (X) im zu markierenden Bild (B5) definiert wird, die Bildposition des Bildsuchbereichs (X) im zu markierenden Bild (B5) solange verändert wird, bis eine Identität zwischen Referenzbildbereich (RX) und Bildsuchbereich (X) einen vorgebbaren Schwellwert unterscheitet.

7. Verfahren nach Anspruch 6,
**dadurch gekennzeichnet, dass**
die Identität durch eine Identitätszahl aus einer Summe der quadrierten Differenzwerte der korrespondierenden Bildpunkte aus dem Bildsuchbereich (X) und dem Referenzbildbereich (RX) erzeugt wird.

8. Verfahren nach einem der vorhergehenden Ansprüche,
**dadurch gekennzeichnet, dass**
als Telekommunikationsprotokoll (TP) ein drahtloser Übertragungsstandard, insbesondere WLAN oder GSM, eingesetzt wird.

9. Mobiles Gerät (VA) zur Durchführung des Verfahrens nach einem der vorhergehenden Ansprüche,
**gekennzeichnet, durch**
- ein erstes Mittel (M1) zum Erzeugen mindestens eines Bildes (B1, ..., Bn),
- ein zweites Mittel (M2) zum Übermitteln zumindest eines Bildes (B1) von dem mobilen Gerät (VA) an eine Kommunikationseinrichtung (VM),
- ein drittes Mittel (M3) zum Empfangen der ausgewählten Position (POS) durch die Kommunikationseinrichtung (VM),
- ein viertes Mittel (M4) zum Markieren mindestens eines der Bilder (B1, ..., Bn), wobei das vierte Mittel (M4) derart ausgestaltet ist, dass ausgehend von zumindest einem der für die Selektion des Bildobjekts (SO) zugrunde gelegten, übermittelten Bilder (B1) und der Position (POS) eine Ortslage (OL) des selektierten Bildobjekts (SO) für mindestens ein zu markierendes Bild (B1, ..., Bn) bestimmt und mindestens einem der Bilder (B1, ..., Bn) an der Ortslage (OL) ein Markierungsobjekt (MO) überlagert wird.

10. Kommunikationseinrichtung (VM) zur Durchführung des Verfahrens nach einem der Ansprüche 1 bis 8 mit dem mobilen Gerät (VA) nach Anspruch 9,
**gekennzeichnet, durch**
- ein fünftes Mittel (M5) zum Empfangen zumindest eines Bildes (B1) von dem mobilen Gerät (VA),
- ein sechstes Mittel (M6) zum Selektieren eines Bildobjekts (SO) auf Grundlage des übermittelten Bildes (B1) und zum Ermitteln einer Position (POS) dieses Bildobjekts (SO),
- ein siebtes Mittel (M7) zum Übermitteln der ermittelten Position (POS) an das mobile Gerät (VA).

11. Mobiles Gerät (VA) nach Anspruch 9 und/oder die Kommunikationseinrichtung (VM) nach Anspruch 10,
**gekennzeichnet dadurch, dass**
das mobile Gerät (VA) und/oder die Kommunikationseinrichtung (VM) in einem tragbaren Gerät, insbesondere einem Gerät nach WLAN-Standard und/oder GSM-Standard, integriert sind.

## Claims

1. Method for mobile communication between a mobile device (VA) and a communication device (VM), wherein the mobile device (VA) and the communication device (VM) use a telecommunication protocol (TP) to interchange voice messages,
having the following steps:
- the mobile device (VA) can produce at least one image (B1, ... , Bn),
- in the event of the production of at least one image (B1), the mobile device (VA) transmits at least this image (B1) to the communication device (VM),
- the communication device (VM) selects an image object (SO) in a transmitted image (B1) and ascertains a position (POS) of this image object (SO),
- the ascertained position (POS) is transmitted to the mobile device (VA) by the communication device (VM),
- the mobile device (VA) marks at least one of the images (B1, ..., Bn) such that at least one of the transmitted images (B1) taken as a basis for the selection of the image object (SO) is used to compute from the position (POS) a local position (OL) of the selected image object (SO) in at least one image (B1, ..., Bn) to be marked and a marking object (MO) is overlaid on at least one of the images (B1, ..., Bn) at the local position (OL).

2. Method according to Claim 1,
**characterized in that**
the communication device (VM) transmits to the mobile device (VA) the selected position (POS) and an identifier (NO) of the transmitted image (B1) taken as a basis for the selection of the image object (SO).

3. Method according to either of the preceding claims,
**characterized in that**
multiple positions (POS1, POS2) are selected for at least one image object (SO1, SO2) to be selected.

4. Method according to Claim 3,
**characterized in that**
the at least one selected position (POS1, POS2) defines an image area describing the selected image object (SO).

5. Method according to Claim 3 or 4,
**characterized in that**
each of the positions (POS1, POS2) has an associated local position (OL1, OL2) generated for it, and
the image (B1) to be marked is overlaid with a respective marking object (MO1, MO2) at each local position (OL1, OL2).

6. Method according to one of the preceding claims,
**characterized in that**
the mobile device (VA) determines the local position (OL) in an image (B5) to be marked by determining a reference image area (RX) in the same image (B1) used for selection of the image object (SO), defining an image search area (X) in the image (B5) to be marked and changing the image position of the image search area (X) in the image (B5) to be marked until an identity between reference image area (RX) and image search area (X) falls below a prescribable threshold value.

7. Method according to Claim 6,
**characterized in that**
the identity is produced by an identity index from a sum of the squared difference values at the corresponding image points from the image search area (X) and the reference image area (RX).

8. Method according to one of the preceding claims,
**characterized in that**
the telecommunication protocol (TP) used is a wireless transmission standard, particularly WLAN or GSM.

9. Mobile device (VA) for performing the method according to one of the preceding claims,
**characterized by**
- a first means (M1) for producing at least one image (B1, ... , Bn),
- a second means (M2) for transmitting at least one image (B1) from the mobile device (VA) to a communication device (VM),
- a third means (M3) for receiving the selected position (POS) on the communication device (VM),
- a fourth means (M4) for marking at least one of the images (B1, ..., Bn), wherein the fourth means (M4) is configured such that at least one of the transmitted images (B1) taken as a basis for the selection of the image object (SO) and the position (POS) are used to determine a local position (OL) of the selected image object (SO) for at least one image (B1, ..., Bn) to be marked, and a marking object (MO) is overlaid on at least one of the images (B1, ..., Bn) at the local position (OL).

10. Communication device (VM) for performing the method according to one of Claims 1 to 8 with the mobile device (VA) according to Claim 9,
**characterized by**
- a fifth means (M5) for receiving at least one image (B1) from the mobile device (VA),
- a sixth means (M6) for selecting an image object (SO) on the basis of the transmitted image (B1) and for ascertaining a position (POS) of this image object (SO),
- a seventh means (M7) for transmitting the ascertained position (POS) to the mobile device (VA).

11. Mobile device (VA) according to Claim 9 and/or the communication device (VM) according to Claim 10,
**characterized in that**
the mobile device (VA) and/or the communication device (VM) are integrated in a portable device, particularly a device based on the WLAN standard and/or GSM standard.

## Revendications

1. Procédé de communication mobile entre un appareil mobile (VA) et un dispositif de communication (VM), des messages vocaux étant échangés par l'appareil mobile (VA) et le dispositif de communication (VM) au moyen d'un protocole de télécommunication (TP), comportant les étapes suivantes :
- au moins une image peut être générée par l'appareil mobile (VA) ;
- si au moins une image (B1) est générée, l'appareil mobile (VA) transmet au moins cette image (B1) au dispositif de communication (VM), le dispositif de communication (VM) sélectionne un objet d'image (SO) dans l'image transmise (B1) et détermine une position (POS) de cet objet d'image (SO) ;
- la position déterminée (POS) est transmise à l'appareil mobile (VA) par le dispositif de communication (VM) ;
- l'appareil mobile (VA) marque au moins l'une des images (B1, ... , Bn) de manière telle qu'est calculé, partant d'au moins une des images (B1) transmises et prises comme base pour la sélection de l'objet d'image (SO), un emplacement (OL) de l'objet d'image sélectionné (SO) à partir de la position (POS) dans au moins une image à marquer (B1, ... , Bn) et qu'à au moins une des images (B1, ... , Bn) est superposé un objet de marquage (MO) à l'emplacement (OL).

2. Procédé selon la revendication 1, **caractérisé en ce que** le dispositif de communication (VM) transmet à l'appareil mobile (VA) la position sélectionnée (POS) et un marquage (NO) de l'image (B1) transmise et prise comme base pour la sélection de l'objet d'image (SO).

3. Procédé selon l'une des revendications précédentes, **caractérisé en ce que** sont sélectionnées plusieurs positions (POS1, POS2) pour au moins un objet d'image (SO1, S02) à sélectionner.

4. Procédé selon la revendication 3, **caractérisé en ce que** l'au moins une position sélectionnée (POS1, POS2) définit une zone d'image décrivant l'objet d'image sélectionné (SO).

5. Procédé selon la revendication 3 ou 4, **caractérisé en ce qu'**est généré, pour chacune des positions (POS1, POS2), un emplacement associé (OL1, OL2) et **en ce qu'**est superposé à l'image à marquer (B1), à chaque emplacement (OL1, OL2), respectivement un objet de marquage (MO1, M02).

6. Procédé selon l'une des revendications précédentes, **caractérisé en ce que** l'appareil mobile (VA), pour déterminer l'emplacement (OL) dans une image à marquer (B5), détermine une zone d'image de référence (RX) dans la même image (B1) prise pour sélectionner l'objet d'images (SO), définit une zone de recherche d'image (X) dans l'image à marquer (B5), modifie la position d'image de la zone de recherche d'image (X) dans l'image à marquer (B5) jusqu'à ce qu'une identité entre zone d'image de référence (RX) et zone de recherche d'image (X) tombe en dessous d'une valeur seuil prédéterminable.

7. Procédé selon la revendication 6, **caractérisé en ce que** l'identité est générée par un nombre d'identité résultant d'une somme des valeurs différentielles au carré des points d'image correspondants tirés de la zone de recherche d'image (X) et de la zone d'image de référence (RX).

8. Procédé selon l'une des revendications précédentes, **caractérisé en ce qu'**est utilisée, en tant que protocole de télécommunication (IP), une norme de transmission sans fil, et plus particulièrement WLAN ou GSM.

9. Appareil mobile (VA) permettant d'exécuter le procédé selon l'une des revendications précédentes, **caractérisé par** :
- un premier moyen (M1) pour générer au moins une image (B1, ... , Bn);
- un deuxième moyen (M2) pour transmettre au moins une image (B1) de l'appareil mobile (VA) à un dispositif de communication (VM) ;
- un troisième moyen (M3) pour la réception de la position sélectionnée (POS) par le dispositif de communication (VM),
- un quatrième moyen (M4) pour marquer au moins l'une des images (B1, ... , Bn), le quatrième moyen (M4) étant réalisé de telle sorte que, partant d'au moins une des images (B1) transmises et prises comme base pour la sélection de l'objet d'image (SO) et de la position (POS), un emplacement (OL) de l'objet d'image sélectionné (SO) est déterminé pour au moins une image à marquer (B1, ... , Bn) et qu'à au moins une des images (B1, ... , Bn) est superposé un objet de marquage (MO) à l'emplacement (OL).

10. Dispositif de communication (VM) permettant d'exécuter le procédé selon l'une des revendications 1 à 8 avec l'appareil mobile (VA) selon la revendication 9, **caractérisé par** :
- un cinquième moyen (M5) pour la réception de l'au moins une image (B1) de l'appareil mobile (VA) ;
- un sixième moyen (M6) pour la sélection d'un objet d'image (SO) sur la base de l'image transmise (B1) et pour la détermination d'une position (POS) de cet objet d'image (SO) ;
- un septième moyen (M7) pour la transmission de la position déterminée (POS) à l'appareil mobile (VA).

11. Appareil mobile (VA) selon la revendication 9 et/ou le dispositif de communication (VM) selon la revendication 10, **caractérisés en ce que** l'appareil mobile (VA) et/ou le dispositif de communication (VM) sont intégrés dans un appareil portatif, et plus particulièrement un appareil selon la norme WLAN et/ou la norme GSM.
